(19) Europäisches Patentamt
European Patent Office
Office européen des brevets

(11) **EP 3 105 037 B1**

(12) **FASCICULE DE BREVET EUROPEEN**

(45) Date de publication et mention de la délivrance du brevet:
**14.03.2018 Bulletin 2018/11**

(21) Numéro de dépôt: **15705657.3**

(22) Date de dépôt: **23.01.2015**

(51) Int Cl.:
**B29C 49/78** (2006.01)    **B29C 49/12** (2006.01)
B29C 49/06 (2006.01)    B29C 49/16 (2006.01)
B29K 67/00 (2006.01)    B29L 31/00 (2006.01)

(86) Numéro de dépôt international:
**PCT/FR2015/050169**

(87) Numéro de publication internationale:
**WO 2015/121558 (20.08.2015 Gazette 2015/33)**

(54) **PROCÉDÉ DE FABRICATION DE RÉCIPIENTS À PARTIR DE PRÉFORMES, PERMETTANT UN CONTRÔLE SYSTÉMATIQUE DE LA CONFORMITÉ DES PRÉFORMES**

VERFAHREN ZUR HERSTELLUNG VON BEHÄLTERN AUS VORFORMEN FÜR EINE SYSTEMATISCHE ÜBERPRÜFUNG DER KONFORMITÄT VON VORFORMEN

METHOD FOR MANUFACTURING CONTAINERS FROM PREFORMS, ALLOWING A SYSTEMATIC CHECK ON THE CONFORMITY OF THE PREFORMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.02.2014 FR 1451097**

(43) Date de publication de la demande:
**21.12.2016 Bulletin 2016/51**

(73) Titulaire: **Sidel Participations**
**76930 Octeville-sur-Mer (FR)**

(72) Inventeurs:
• **GENDRE, Julien**
**F-76930 Octeville Sur Mer (FR)**

• **LETHUILLIER, Frédéric**
**F-76930 Octeville Sur Mer (FR)**

(74) Mandataire: **Grassin d'Alphonse, Emmanuel Jean Marie et al**
**Sidel Participations**
**Avenue de la Patrouille de France**
**76930 Octeville-sur-mer (FR)**

(56) Documents cités:
**EP-A1- 1 777 056        EP-A1- 2 537 664**
**WO-A1-2013/178903    US-A1- 2013 081 454**

EP 3 105 037 B1

**Description**

L'invention a trait à la fabrication des récipients par soufflage ou étirage soufflage à partir de préformes en matière thermoplastique tel que PET (polyéthylène téréphtalate).

La fabrication des récipients est conduite au sein d'une installation dédiée et comprend deux phases principales : la chauffe et le formage. Les préformes issues de moulage (généralement par injection, bien qu'il existe des techniques de moulage par compression) sont initialement stockées en vrac dans une trémie d'un système d'alimentation, d'où elles sont extraites puis orientées (généralement col en bas) pour être chauffées.

Pour la phase de chauffe, l'installation comprend un four équipé de sources de rayonnement infrarouge (typiquement des lampes halogènes) devant lesquelles défilent en ligne les préformes issues de la trémie. La phase de chauffe est cyclique, les préformes destinées à une gamme donnée de récipient étant exposées à un même rayonnement pendant une même durée prédéterminée (dénommée couramment temps de chauffe).

Un cycle complet de chauffe, qui s'étend de l'entrée dans le four d'une préforme froide, issue du système d'alimentation, à la sortie du four de la même préforme chaude, dure généralement moins d'une minute, typiquement une vingtaine de secondes.

En théorie, toutes les préformes ayant suivi le même cycle de chauffe présentent, à la sortie du four, la même température, qui dépend essentiellement de la vitesse de défilement des préformes, de la longueur du four, du spectre et de la puissance rayonnés par celui-ci, ainsi que des propriétés d'absorption du matériau des préformes.

Dans un four ordinaire (halogène), le spectre rayonné par les sources est fixe. Il en va de même de la longueur du four. Sont également incontrôlables les propriétés d'absorption du matériau. En revanche, la vitesse de défilement et la puissance rayonnée peuvent varier en fonction de consignes programmées dans une unité électronique (ou informatique) de contrôle du four.

Si l'on désigne par « consigne de température » la température théorique que doivent présenter les préformes à la sortie du four, cette consigne découle en réalité de la puissance rayonnée dans le four, et donc de la puissance électrique délivrée aux sources, qui peut être programmée dans l'unité de contrôle. En variante, on peut programmer directement une consigne de température, l'unité de contrôle étant alors programmée pour convertir cette température en puissance à délivrer aux sources. Dans ce qui suit, l'expression « consigne de température » désigne indifféremment une valeur théorique de température programmée dans l'unité de contrôle, ou une valeur de puissance à délivrer aux sources de rayonnement.

Pour la phase de formage, l'installation comprend une unité de formage du type rotatif, munie d'un carrousel et équipée, à la périphérie du carrousel, d'une pluralité de moules à l'empreinte des récipients à former.

A l'issue du four, chaque préforme encore chaude est introduite dans un moule. Un fluide (en général de l'air) est injecté sous pression dans la préforme pour former le récipient. Le formage comprend généralement deux étapes : une première étape dite de présoufflage lors de laquelle le fluide est injecté à une pression (relativement faible) et un débit de présoufflage prédéterminés, immédiatement suivie d'une phase de soufflage, lors de laquelle le fluide est injecté à une pression (comparativement plus élevée) et un débit de soufflage prédéterminés. Typiquement, pour la réalisation de récipients destinés à être remplis d'eau plate, la pression de présoufflage est de l'ordre de 7 bars, et la pression de soufflage de l'ordre de 25 bars.

Le fluide sous pression de présoufflage est issu d'une source de pression ; il est délivré via une électrovanne commandée par une unité électronique (ou informatique) de contrôle de l'unité de formage. La pression de présoufflage peut être ajustée au moyen d'un régulateur de pression. Il en va de même du débit, qui peut être ajusté au moyen d'un restricteur de débit. On comprend par conséquent que la pression et le débit de présoufflage peuvent être ajustés suivant des consignes respectives programmées dans l'unité de contrôle de l'unité de formage, qui pilote l'électrovanne, le régulateur de pression et le restricteur de débit en fonction des consignes.

Les progrès réalisés au cours de la dernière décennie dans les domaines des capteurs et de l'informatique ont permis aux constructeurs d'instrumenter les installations pour assurer un suivi de certains paramètres critiques (notamment la température de chauffe des préformes et la pression dans les récipients en cours de formage), et effectuer une analyse de ces paramètres pour y détecter des dérives caractéristiques de défauts machine.

La mesure de température est illustrée dans la demande de brevet français FR 2 935 924 et dans son équivalent américain US 2011/0236518. La mesure de pression est illustrée dans la demande de brevet français FR 2 909 305 et dans son équivalent américain US 2010/201013.

Dans cette dernière demande, il est préconisé de détecter un pic local de pression lors de la phase de présoufflage et, lorsque ce pic (atteint à l'instant de développement de la préforme où le seuil d'écoulement plastique de la matière est atteint) ne coïncide pas avec un pic théorique, de modifier au moins un paramètre machine parmi un ensemble comprenant notamment la température de chauffe, la pression de présoufflage et le débit de présoufflage. En d'autres termes, l'installation est programmée pour détecter ses propres défauts et pour les corriger au besoin, afin de limiter les défauts de fabrication dans les récipients.

Ce procédé fonctionne à merveille tant que la dérive constatée du pic local de pression est effectivement due à un défaut machine. Dans ce cas, l'installation peut, par une correction de ses propres paramètres, ramener le pic local de pression dans une zone de tolérance dans laquelle il est admis que les récipients produits sont conformes au modèle.

D'autres procédés connus sont décrits dans les documents WO2013/178903 et EP2537664A1.

Il a cependant été constaté dans certains cas que ces actions de correction n'aboutissaient ni à une disparition, ni même à une maîtrise de la dérive du pic local de pression. Bien au contraire, il advenait que ces actions de correction provoquaient une aggravation de la dérive du pic, contrairement à l'effet escompté, au point qu'il devenait nécessaire de stopper la production pour réinitialiser les paramètres de la machine.

Des recherches ont été conduites pour identifier les causes de la dérive affectant le pic local de pression indépendamment des paramètres machine. Ces recherches ont permis de déterminer que le pic local de pression peut être affecté de manière significative par une variation du taux d'humidité dans les préformes.

A la connaissance des inventeurs, une telle relation n'avait jamais été mise en évidence. Il est certes connu que les propriétés mécaniques d'une matière plastique (tout particulièrement le PET) peuvent être affectées par le taux d'humidité de la matière. Cependant, comme l'explique L. Vouyovitch van Schoors dans *Vieillissement hydrolytique des géotextiles polyester (polyéthylène téréphtalate) - État de l'art,* in Bulletin des Laboratoires des Ponts et Chaussées, n°270-271, oct/nov/déc 2007, « c'est le vieillissement chimique et plus précisément les phénomènes d'hydrolyse qui régissent la durabilité de ces matériaux (...). Ce type de vieillissement est généralement très lent à température ambiante, du fait de la faible vitesse de l'acte chimique élémentaire et d'une diffusion lente de l'eau au sein de la matrice polymère ».

Dans le cas du formage des récipients à partir de préformes en PET, il est peu probable que la variation du pic local de pression lors de la phase de présoufflage puisse résulter d'un phénomène d'hydrolyse du matériau, car les durées moyennes de stockage des préformes (à température ambiante) avant leur introduction dans la chaîne de fabrication des récipients sont bien trop courtes : quelques jours, un mois tout au plus.

Il est en revanche plausible qu'une différence de taux d'humidité de la matière d'une préforme à l'autre se concrétise lors de la chauffe par une différence de leurs propriétés mécaniques respectives, induisant un comportement différent de ces préformes dès le présoufflage.

Plus précisément, il ressort de tests conduits sur des préformes présentant divers taux d'humidité que la ténacité d'un récipient varie en raison inverse du taux d'humidité de la préforme dont il est issu. Il est donc important de s'assurer que le taux d'humidité des préformes ne dépasse pas un seuil déterminé, au-delà duquel les récipients présentent une ténacité insuffisante et devraient être mis au rebut.

Dans la pratique toutefois, les cadences de fabrication (de l'ordre de 50 000 récipients par ligne de production) ne permettent pas de procéder à une mesure systématique du taux d'humidité des préformes. Tout au plus est-il envisageable d'effectuer des prélèvements et de procéder sur les préformes prélevées à des mesures manuelles. Une technique ordinaire de mesure du taux d'humidité d'un plastique consiste à réduire un échantillon en poudre ou en granulés (la mesure étant par conséquent destructive), à en effectuer une première pesée, puis à le chauffer en atmosphère sèche pendant une durée prédéterminée (de l'ordre de plusieurs minutes) et à en effectuer une deuxième pesée, la différence de masse permettant de déterminer la masse d'eau évaporée. Un programme permet d'en déduire la masse totale d'eau initialement présente dans l'échantillon, rapportée à la masse totale de celui-ci.

Cette technique, illustrée par la demande de brevet européen EP 2 574 902 ou son équivalent américain US 2013/081454, nécessite une destruction au moins partielle de l'échantillon et un délai de traitement de plusieurs minutes. Pour chacune de ces deux raisons, une telle technique est inapplicable au contrôle en continu du taux d'humidité des préformes sur une ligne de production de récipients. D'abord, l'intégrité de chaque préforme doit être préservée, sauf à imaginer de concevoir un nouveau type de préforme muni d'une partie détachable destinée au contrôle, ce qui suppose une modification substantielle de la technique de fabrication ainsi qu'une consommation de matière accrue. Ensuite, une cadence de fabrication de 50 000 récipients par heure implique qu'une préforme est introduite dans la ligne de production (respectivement, un récipient est évacué de la ligne de production) toutes les 70 millisecondes environ. Seule une mesure optique tiendrait une telle cadence. Des essais ont toutefois démontré qu'une variation du taux d'humidité n'a d'effet mesurable ni en entrée du four (pas de variation mesurable de la transparence du matériau à température égale) ni en sortie (pas de variation mesurable de la distribution thermique dans la préforme à conditions de chauffe égales).

Les inventeurs ont par conséquent eu l'idée d'utiliser les variations de pression au pic local de pression lors du présoufflage pour en déduire des informations sur le taux d'humidité des préformes.

La mise en oeuvre de cette idée est cependant délicate, car elle implique de permettre à la machine, qui effectue les mesures de manière automatisée pour détecter notamment une dérive du pic de pression, d'effectuer une discrimination entre un défaut affectant la machine (corrigeable par action sur les paramètres machine) et une non-conformité des préformes (non corrigeable et nécessitant d'autres actions).

Un premier objectif est par conséquent de proposer un procédé de fabrication de récipients à partir de préformes, permettant de procéder à un contrôle en continu de la conformité des préformes quant à leur taux d'humidité.

Un deuxième objectif est de permettre un contrôle fiable de la conformité des préformes.

Un troisième objectif est de permettre une discrimination entre des causes de dérive interne à la machine et des défauts affectant les préformes.

A cet effet, il est proposé, en premier lieu, un procédé de fabrication de récipients par soufflage à partir de préformes en matière thermoplastique, qui comprend une phase cyclique de chauffe des préformes au défilé au sein d'un four, à une température de chauffe et une vitesse de défilement suivant une consigne de chauffe programmée, suivie d'une phase cyclique de formage des préformes au sein d'une unité de formage comportant une pluralité de postes de moulage chacun équipé d'un moule à l'empreinte d'un récipient, la phase de formage comprenant une étape de présoufflage consistant à injecter dans les préformes un gaz à une pression et un débit de présoufflage suivant une consigne de formage programmée, suivie d'une étape de soufflage consistant à injecter dans les préformes un gaz à une pression de soufflage supérieure à la pression de présoufflage, ce procédé comprenant en outre la répétition des opérations consistant à :

- mesurer, à chaque instant, une valeur réelle de la pression régnant dans les préformes au sein de chaque moule, au moins pendant l'étape de présoufflage ;
- mémoriser les valeurs réelles de pression ainsi mesurées et les instants de mesure associés ;
- détecter parmi ces valeurs réelles de pression une valeur réelle maximale ;
- comparer cette valeur réelle maximale et l'instant de mesure associé avec, respectivement, une valeur maximale de référence prédéterminée et un instant de référence associé ;
- vérifier si les conditions nécessaires suivantes sont conjointement remplies sur une période supérieure ou égale à la durée d'un cycle de chauffe et pour l'ensemble des postes de moulage :

  ○ l'instant de mesure associé à la valeur réelle maximale coïncide avec l'instant de référence,
  ○ la valeur réelle maximale est inférieure à la valeur maximale de référence,

- si ces conditions sont conjointement remplies, vérifier dans un historique d'événements si la consigne de chauffe et/ou la consigne de formage n'a connu aucune modification pendant un intervalle de temps prédéterminé ayant précédé la mesure,
- si le résultat de cette vérification est positif, décréter non conformes les préformes concernées ;
- commander au moins l'une des actions suivantes :

  ○ générer une alerte,
  ○ stopper l'alimentation du four en préformes,
  ○ éjecter les récipients issus des préformes non conformes.

Selon diverses caractéristiques particulières, prises seules ou en combinaison :

- l'instant de mesure associé à la valeur réelle maximale est décrété coïncider avec l'instant de référence si la différence entre eux est inférieure ou égale à 10 ms environ, et plus particulièrement inférieure ou égale à 5 ms environ ;
- la valeur réelle maximale de pression est inférieure à la valeur maximale de référence si l'écart entre ces valeurs est supérieur à quelques centaines de millibars ;
- la génération d'une alerte consiste à afficher un message sur une interface graphique ;
- le four et l'unité de chauffe sont pilotés respectivement par des unités de contrôle esclaves dédiées, asservies à une même unité de contrôle maître qui effectue les opérations de vérification.

L'invention se rapporte, selon un deuxième aspect, à une installation de fabrication de récipients par soufflage à partir de préformes en matière thermoplastique, cette installation comprenant :

- un four dans lequel les préformes subissent une phase cyclique de chauffe à une température de chauffe et une vitesse de défilement suivant une consigne de chauffe ;
- un système d'alimentation du four en préformes ;
- une unité de formage comportant une pluralité de postes de moulage chacun équipé d'un moule à l'empreinte d'un récipient, pour le formage des récipients par soufflage ou étirage soufflage des préformes issues du four, suivant une phase cyclique de formage comprenant une étape de présoufflage consistant à injecter dans les préformes un gaz à une pression et un débit de présoufflage suivant une consigne de formage, suivie d'une étape de soufflage consistant à injecter dans les préformes un gaz à une pression de soufflage supérieure à la pression de présoufflage ;
- un système de commande incluant au moins une mémoire dans laquelle sont mémorisées la consigne de chauffe et la consigne de formage, ce système étant programmé pour :

  ○ mesurer, à chaque instant, une valeur réelle de la pression régnant dans les préformes au sein de chaque moule, au moins pendant l'étape de présoufflage ;
  ○ mémoriser les valeurs réelles de pression ainsi mesurées et les instants de mesure associés ;
  ○ détecter parmi ces valeurs réelles de pression une valeur réelle maximale ;
  ○ comparer cette valeur réelle maximale et l'instant de mesure associé avec, respectivement, une valeur maximale de référence prédéterminée et un instant de référence associé ;

le système de commande étant programmé pour :

- vérifier si les conditions nécessaires suivantes sont conjointement remplies sur une période supérieure ou égale à la durée d'un cycle de chauffe et pour l'ensemble des postes de moulage :

  ◦ l'instant de mesure associé à la valeur réelle maximale coïncide avec l'instant de référence,
  ◦ la valeur réelle maximale est inférieure à la valeur maximale de référence,

- si ces conditions sont conjointement remplies, vérifier dans un historique d'événements si la consigne de chauffe et/ou la consigne de formage n'a connu aucune modification pendant un intervalle de temps prédéterminé ayant précédé la mesure ;
- si le résultat de cette vérification est positif, décréter non conformes les préformes concernées ;
- commander au moins l'une des actions suivantes :

  ◦ générer une alerte,
  ◦ stopper l'alimentation du four en préformes,
  ◦ éjecter les récipients issus des préformes non conformes.

L'invention se rapporte, selon un troisième aspect, à un programme d'ordinateur implémenté sur une unité de traitement informatique intégrée à un système de commande d'une installation de fabrication de récipients, ce programme comprenant des instructions pour la mise en oeuvre des étapes d'un procédé de fabrication de récipients tel qu'il vient d'être présenté.

D'autres objets et avantages de l'invention apparaîtront à la lumière de la description d'un mode de réalisation, faite ci-après en référence aux dessins annexés dans lesquels :

- la figure 1 est une vue schématique montrant une installation de fabrication de récipients, comprenant un four et une machine de soufflage ;
- la figure 2 est une vue schématique illustrant plus en détail l'architecture du dispositif permettant d'effectuer la mesure de pression au sein des préformes ;
- la figure 3 est un diagramme sur lequel sont tracées deux courbes illustrant les variations de la pression en fonction du temps au cours de la phase de présoufflage, pour deux préformes ayant des taux d'humidité différents.

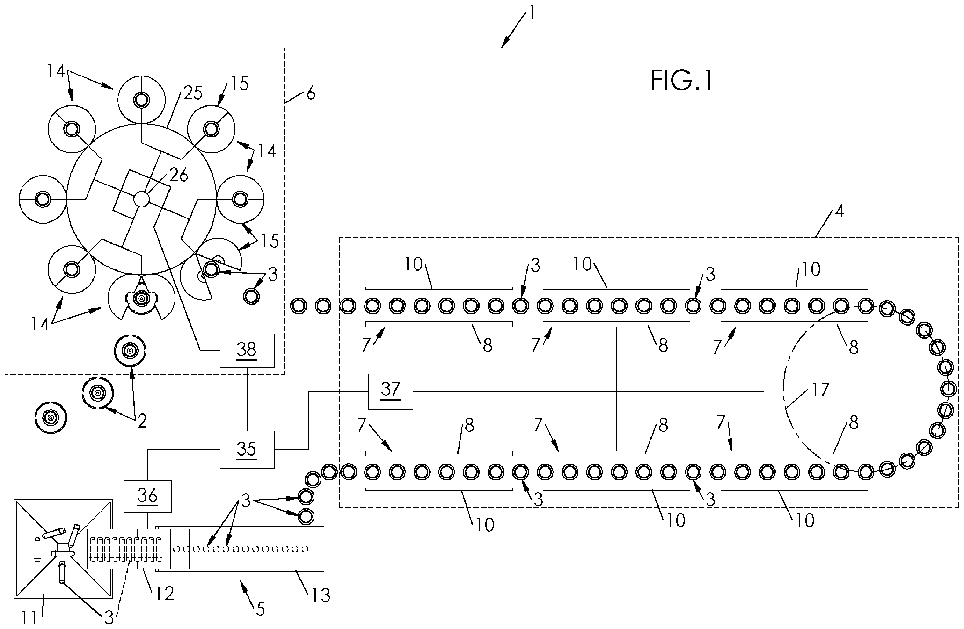

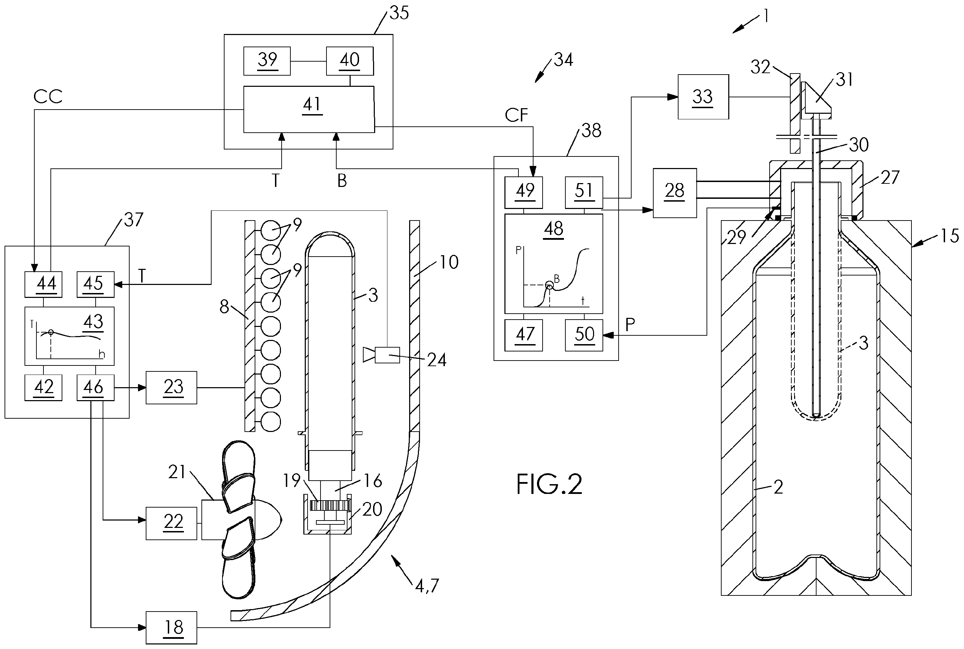

On a représenté schématiquement sur les figures 1 et 2 une installation 1 de fabrication de récipients 2 à partir de préformes 3 en matière thermoplastique, notamment en PET (polyéthylène téréphtalate).

L'installation 1 comprend trois unités de traitement successives reliées entre elles, à savoir une unité 4 de chauffe ou four, un système 5 d'alimentation du four en préformes 3, et une unité 6 de formage des récipients 2 par soufflage ou étirage soufflage des préformes 3 issues du four 4.

Le four 4 comprend une série de modules 7 de chauffe ayant chacun une paroi 8 rayonnante munie de sources 9 superposées de rayonnement infrarouge, et de préférence (comme illustré) une paroi 10 réfléchissante placée en face de la paroi 8 rayonnante pour réfléchir la portion de rayonnement non absorbé par les préformes 3.

Le système 5 d'alimentation comprend :

- une trémie 11, dans laquelle les préformes 3 sont stockées en vrac, en y étant déversées régulièrement par lots (soit manuellement soit de manière automatisée, à partir de stocks roulants),
- un élévateur 12 qui prélève en continu des préformes 3 dans la trémie 11,
- un tunnel 13 d'alignement et de démêlage, dans lequel les préformes 3 prélevées par l'élévateur sont déversées.

Un tel système 5 d'alimentation est bien connu, notamment du brevet français FR 2 864 050 ou de son équivalent américain US 7 556 137, et ne sera donc pas décrit plus en détail.

L'unité 6 de formage est équipée d'une série de postes 14 de formage chacun muni d'un moule 15 à l'empreinte d'un récipient 2.

Sur la figure 1, l'installation 1 est représentée de manière très schématique. En particulier, les facteurs d'échelle ne sont pas respectés aux fins de clarté et de compacité. On voit ainsi que, de manière artificielle, le système 5 d'alimentation est sous-dimensionné par rapport au four 4, ce dont témoigne la taille plus petite des préformes 3.

De manière classique, les préformes 3 à température ambiante en provenance du système 5 d'alimentation sont, éventuellement après retournement pour être orientées col en bas, introduites dans le four 4 par une entrée de celui-ci. Puis les préformes 3 sont chauffées au défilé dans le four 4 à une température supérieure à la température de transition vitreuse de la matière (d'environ 80°C pour le PET). La température de chauffe des préformes 3 en PET est typiquement d'environ 120°C.

Selon un mode particulier de réalisation illustré sur les figures 1 et 2, les préformes 3 sont, dans le four 4, montées sur des supports 16 pivotants dénommés tournettes. Chaque tournette 16 est montée sur une chaîne circulant sur une roue 17 motrice entraînée en rotation par un moteur 18. Chaque tournette 16 est munie d'un pignon 19 qui engrène une crémaillère 20 pour entraîner la tournette 16 en rotation pendant son défilement dans le four 4 et ainsi exposer la surface de chaque préforme **3** au rayonnement issu des sources **9.**

Pour évacuer au moins une partie de la chaleur excédentaire produite par la paroi **8** rayonnante, le four **4** peut être équipé d'un système d'extraction comprenant par exemple un ventilateur **21** entraîné par un moteur **22** et positionné au droit des cols des préformes **3.**

En outre, la puissance du rayonnement émis par la paroi **8** rayonnante peut être modulée au moyen d'un variateur **23** de puissance, comme dans l'exemple de réalisation illustré sur la figure 2.

Le profil thermique des préformes **3** est de préférence contrôlé, soit directement dans le four **4,** soit en sortie de celui-ci, au moyen d'un capteur **24** thermique. Selon un mode de réalisation illustré sur la figure 2, le capteur **24** thermique est une caméra thermique pointant vers les préformes **3.**

A la sortie du four **4,** les préformes **3** ainsi chauffées sont transférées (en étant éventuellement retournées pour être orientées col en haut) vers l'unité **6** de formage via une unité de transfert (telle qu'une roue de transfert) pour être formées chacune en récipient par soufflage ou étirage soufflage dans un moule **15** individuel.

A l'issue du formage, les récipients **2** sont évacués des moules **15** en vue d'être directement remplis et étiquetés, ou stockés temporairement en vue d'être remplis et étiquetés ultérieurement. Une fois remplis et étiquetés, les récipients **2** sont groupés et conditionnés, par exemple au sein d'une unité de fardelage qui enveloppe chaque groupe de récipients au moyen d'un film thermorétractable.

Comme on le voit également sur la figure 1 , l'unité **6** de formage comprend un carrousel **25** tournant, couramment appelé roue, à la périphérie duquel sont montés les postes **14** de formage, et un capteur **26** de la position angulaire instantanée de la roue **25,** sous forme par exemple d'un codeur (il s'agit en pratique d'un roulement instrumenté).

Chaque poste **14** de formage est équipé d'une tuyère **27** par laquelle un fluide (notamment un gaz tel que de l'air) est injecté dans le moule **15.** Chaque poste **14** de formage est également équipé d'un dispositif d'injection comprenant un bloc **28** d'actionneurs relié à la tuyère **27** pour commander l'injection du fluide.

Le bloc **28** d'actionneur comprend par exemple des électrovannes, par l'intermédiaire desquelles la tuyère **27** est mise en communication avec des sources de fluide sous pression, au moins un variateur de pression pour ajuster la pression du fluide suivant une consigne de pression prédéterminée, et au moins un restricteur de débit pour ajuster le débit de fluide suivant une consigne de débit prédéterminée.

En outre, chaque poste **14** de formage est muni d'un dispositif **29** de mesure de la pression (notée **P**) régnant dans la préforme **3** - c'est-à-dire dans le récipient **2** en cours de formage. Dans l'exemple illustré, le dispositif **29** de mesure comprend un capteur de pression monté au niveau de la tuyère **27,** dans laquelle la pression est, lors du formage, identique à la pression régnant dans celle-ci.

Selon un mode de réalisation correspondant à un procédé de formage par étirage soufflage, chaque poste **14** de formage comprend en outre une tige **30** d'étirage mobile, solidaire d'un chariot **31** monté en translation par rapport à un support **32.**

Le mouvement de la tige **30** est commandé de manière électromagnétique. A cet effet, le support **32** comprend une piste électromagnétique reliée à un moteur **33,** et le chariot **31** est lui-même magnétique. Le signe et la puissance du courant traversant la piste permettent de déplacer la tige **30** suivant un profil de déplacement prédéterminé, comprenant une direction et une vitesse de déplacement, également dénommée vitesse d'étirage.

L'installation **1** est équipée d'un système **34** de commande comprenant une unité **35** de contrôle maître de l'installation **1** et plusieurs unités **36, 37, 38** de contrôle esclaves (en l'espèce au nombre de trois) asservies à l'unité **35** de contrôle maître et pilotant respectivement le système **5** d'alimentation, le four **4,** et l'unité **6** de formage.

L'unité **35** de contrôle maître est informatisée et comprend :

- une mémoire **39** dans laquelle sont inscrits des programmes de pilotage du four **4,** système **5** d'alimentation, et de l'unité **6** de formage,
- un processeur **40** relié à la mémoire **39** pour appliquer les instructions des programmes, et
- une interface **41** de communication reliée au processeur **40** pour la communication avec les unités **36, 37, 38** de contrôle esclaves.

L'unité **37** de contrôle du four **4** comprend :

- une mémoire **42** dans laquelle sont inscrits des programmes de pilotage des modules **7** de chauffe,
- un processeur **43** relié à la mémoire **42** pour appliquer les instructions du programme,
- une interface **44** de communication reliée au processeur **43** pour la communication avec l'unité **35** de contrôle maître via l'interface **41** de communication de celle-ci,
- une interface **45** d'entrée reliée d'une part au processeur **43** et d'autre part au capteur **24** thermique,
- une interface **46** de sortie reliée d'une part au processeur **43** et d'autre part au variateur **23** de puissance et aux moteurs **18, 22** de la roue **17** motrice et du ventilateur **22.**

L'unité **37** de contrôle du four **4** est programmée pour effectuer notamment les opérations suivantes :

- piloter le ou chaque module **7** de chauffe auquel il est associé, selon une consigne **CC** de chauffe programmée (c'est-à-dire inscrite) dans la mémoire **42** ;

- à partir de la mesure de température (notée **T**) issue du capteur **20** thermique, établir le profil thermique instantané de chaque préforme **3,** qui peut se présenter sous forme d'une température moyenne mesurée pour l'ensemble de la préforme **3,** d'un ensemble de plusieurs valeurs de température à différentes hauteurs sur le corps de la préforme **3,** ou d'une courbe donnant la température **T** en fonction de la hauteur (notée **h**) sur la préforme **3** ;
- communiquer le profil thermique ainsi établi à l'unité **35** de contrôle maître.

La consigne **CC** de chauffe fait partie du programme de pilotage du four **4** ; à ce titre, elle est initialement programmée dans la mémoire **39** de l'unité **35** de contrôle maître, qui la communique à l'unité **37** de contrôle du four **4.** La consigne **CC** comprend au moins l'une, et de préférence l'ensemble, des paramètres suivants :

- une valeur ou un profil de température de référence, ou encore une valeur ou un profil de puissance de référence délivrée par le variateur **23,**
- une vitesse de référence de rotation du moteur **22** du ventilateur **21,**
- une vitesse de rotation de la roue **17** motrice (et donc, par voie de conséquence, une vitesse de défilement des préformes **3** - en d'autres termes la cadence de production du four **4**).

La consigne **CC** de chauffe est susceptible de subir des variations, par exemple à l'initiative d'un opérateur. Dans ce cas, celui-ci peut effectuer la correction qu'il estime nécessaire par une reprogrammation de l'unité **35** de contrôle maître. La consigne **CC** corrigée est alors relayée à l'unité **37** de contrôle du four **4,** et inscrite par le processeur **43** dans la mémoire **42.**

Les variations de consigne **CC** de chauffe sont inscrites dans un historique tenu à jour dans la mémoire **39** de l'unité **35** de contrôle maître.

Inversement, l'unité **35** de contrôle dispose des profils thermiques des préformes et peut être programmée pour en effectuer une analyse en vue d'y détecter des variations par rapport à un profil thermique de référence. Ces variations peuvent être inscrites dans l'historique.

L'unité **38** de contrôle esclave associée à l'unité **6** de formage comprend :

- une mémoire **47** dans laquelle sont inscrits des programmes de pilotage des postes **14** de formage,
- un processeur **48** relié à la mémoire **47** pour appliquer les instructions du programme,
- une interface **49** de communication reliée au processeur **48** pour la communication avec l'unité **35** de contrôle maître,
- une interface **50** d'entrée reliée d'une part au processeur **48** et d'autre part au dispositif **29** de mesure de la pression, notée **P,** régnant dans le moule **15,**

- une interface **51** de sortie reliée d'une part au processeur **48** et d'autre part au bloc **28** d'actionneurs et, le cas échéant, au moteur **33** de commande de la tige **30** d'étirage.

En variante, les interfaces **50, 51** d'entrée et de sortie peuvent être rassemblées au sein d'une interface unitaire d'entrée/sortie.

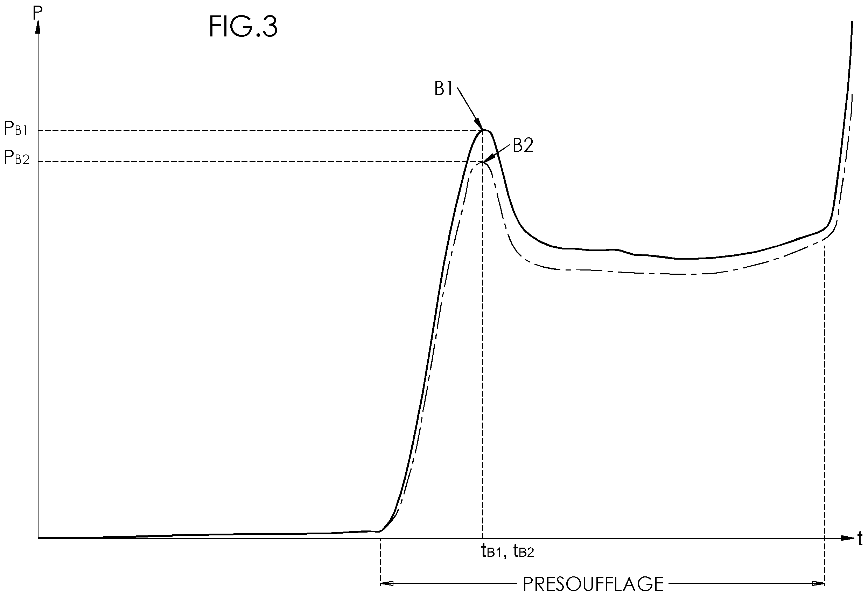

Le formage est cyclique, c'est-à-dire que chaque préforme **3** subit successivement la même séquence d'opérations. Le formage comprend deux étapes : une première étape de présoufflage, lors de laquelle le fluide est injecté dans la préforme **3** à une pression de présoufflage relativement faible (typiquement de l'ordre de 7 bars), à un certain débit de présoufflage, suivie d'une étape de soufflage lors de laquelle le fluide est injecté dans la préforme **3** à une pression de soufflage comparativement plus élevée (typiquement de l'ordre de 25 bars), à un certain débit de soufflage. La tendance générale des évolutions de la pression dans la préforme **3** au cours du formage est connue, cf. par ex. la courbe de pression de la figure 3 de la demande de brevet français FR 2 909 305 ou de son équivalent américain US 2010/201013.

L'unité **37** de contrôle de l'unité **6** de formage est programmée pour effectuer notamment les opérations suivantes :

- piloter chaque poste **14** de formage pour l'accomplissement d'un cycle complet de formage, depuis le chargement d'une préforme **3** jusqu'au déchargement du récipient **2** formé, selon une consigne **CF** de formage programmée (c'est-à-dire inscrite) dans la mémoire **47** ;
- commander une mesure, à chaque instant, d'une valeur réelle de la pression régnant dans les préformes au sein de chaque moule **15.** La mesure de pression est réalisée en continu par le capteur **29** de pression en continu ou de manière séquentielle et régulière, à intervalles prédéterminés (par exemple de 5 ms) et communiquée au processeur **48** via l'interface **50** d'entrée ;
- mémoriser les valeurs réelles de pression ainsi mesurées et les instants de mesure associés,
- à partir de ces mesures, établir pendant le cycle de formage une courbe de soufflage décrivant l'évolution de la pression **P** de fluide dans le moule **15** à chaque instant, noté **t** (en pratique aux instants, mesurés par l'horloge interne du processeur **48,** correspondant aux positions angulaires fournies par le capteur **26** angulaire), cette courbe (visible schématiquement sur la figure 2) étant établie par le processeur **48** et mémorisée au cours du cycle.

La consigne **CF** de formage fait partie du programme de pilotage de l'unité **6** de formage ; à ce titre, elle est initialement programmée dans la mémoire **39** de l'unité **35** de contrôle maître, qui la communique à l'unité **38** de contrôle de l'unité **6** de formage. La consigne **CF** comprend au moins l'une, et de préférence l'ensemble, des paramètres suivants :

- la pression de présoufflage à délivrer par le bloc **28** d'actionneurs,
- le débit de présoufflage à délivrer par le bloc **28** d'actionneurs,
- la pression de soufflage à délivrer par le bloc **28** d'actionneurs,
- le débit de soufflage à délivrer par le bloc **28** d'actionneurs,
- la vitesse d'étirage de la tige **30.**

La consigne **CF** de formage est susceptible de subir des variations, par exemple à l'initiative d'un opérateur. Dans ce cas, celui-ci peut effectuer la correction qu'il estime nécessaire par une reprogrammation de l'unité **35** de contrôle maître. La consigne **CF** corrigée est alors relayée à l'unité **38** de contrôle de l'unité **6** de formage, et inscrite par le processeur **48** dans la mémoire **47.**

Les variations de consigne **CF** de formage sont inscrites dans l'historique tenu à jour dans la mémoire **39** de l'unité **35** de contrôle maître.

La consigne **CF** est appliquée par le processeur **48,** qui pilote le bloc **28** d'actionneurs en conséquence, via l'interface **51** de sortie ; la vitesse d'étirage peut être convertie par le processeur **48** du contrôleur **38** en puissance à délivrer par le moteur **33.**

L'unité **38** de contrôle de l'unité **6** de formage est en outre programmée pour effectuer les opérations suivantes :

- analyser la courbe de soufflage et en extraire les coordonnées (valeur réelle, instant de mesure associé) d'un pic local de pression lors de l'étape de présoufflage, dénommé point **B,** tel que défini dans la demande FR 2 909 305 (ou dans son équivalent américain US 2010/201013) ;
- communiquer dès la fin du cycle les coordonnées du point **B** à l'unité **35** de contrôle maître.

Le processeur **40** de l'unité **35** de contrôle maître est alors programmé pour :

- prendre en compte les points **B** réels communiqués par l'unité **38** de contrôle de l'unité **6** de formage sur une période supérieure ou égale à la durée d'un cycle de chauffe et pour l'ensemble des postes **14** de formage,
- comparer chaque point **B** réel avec un point de référence (défini par une valeur de pression, appelée pression de référence, et un instant associé, dit instant de référence) inscrit préalablement dans la mémoire **39** de l'unité **35** de contrôle maître et correspondant à un récipient modèle.

Plus précisément, le processeur **40** est programmé pour comparer la pression et l'instant de chaque point **B** avec, respectivement, la pression et l'instant de référence.

L'objectif est de détecter une variation du taux d'humidité dans les préformes **3** par une dérive du point **B.** Le processeur **40** est par conséquent programmé pour n'agir que si les conditions suivantes, dites conditions nécessaires, sont conjointement remplies sur une période supérieure ou égale à la durée d'un cycle de chauffe et pour l'ensemble de postes **14** de formage :

- l'instant du point **B** réel coïncide (avec une tolérance prédéterminée, typiquement de l'ordre de quelques millisecondes) avec l'instant de référence ;
- la pression au point **B** réel est inférieure à la valeur maximale de référence.

L'expérience montre que en effet deux préformes **3** ayant des taux d'humidité différents présentent, à conditions de chauffe et de formage égales, des pics de pression lors du présoufflage (points **B**) qui ne diffèrent que par la valeur de la pression (en ordonnée sur la figure 3), les instants associés étant confondus. En d'autres termes, une variation de taux d'humidité dans la préforme n'implique pas de décalage temporel du point **B.**

Par conséquent, une dérive temporelle du point **B** est analysée comme ayant d'autres causes qu'une variation du taux d'humidité dans les préformes.

En outre, les inventeurs ont observé que la pression au point **B** varie en raison inverse du taux d'humidité dans la préforme. Ainsi, lorsque la pression au point **B** est supérieure à la pression de référence, cela signifie que le taux d'humidité de la préforme dont le récipient est issu est inférieur à celui du récipient modèle et ne justifie par conséquent aucune action particulière.

En revanche, le fait que les conditions nécessaires précitées soient remplies est un indice qu'une variation au moins temporaire du taux d'humidité affecte les préformes. Le fait que ces conditions soient remplies sur une période supérieure ou égale à la durée d'un cycle de chauffe et pour l'ensemble des postes de formage témoigne qu'un tel défaut, s'il est avéré, affecte toutes les préformes, ce dont on peut déduire qu'un lot complet est peut-être affecté par une variation du taux d'humidité.

Ces conditions ne sont toutefois pas suffisantes pour justifier les conclusions précitées. En effet, un défaut affectant l'un au moins des paramètres machine (température ou profil de chauffe, vitesse de défilement, pression de présoufflage, débit de présoufflage, et éventuellement vitesse d'étirage) peut être à l'origine d'une variation du point **B.**

C'est pourquoi l'unité **35** centrale de contrôle est programmée pour effectuer une vérification qu'aucun de ces paramètres n'a connu de modification de consigne **CC** ou **CF** pendant un intervalle de temps prédéterminé ayant précédé la séquence de mesure des points **B** ayant dérivé, supérieur ou égal à la durée du cycle de chauffe. En effet, toute modification des consignes **CC** ou **CF** induit une modification des conditions opératoires auxquelles sont soumises les préformes. En particulier, toute modification du profil ou de la température de chauffe nécessite une stabilisation du four **4**, les préformes **3** présentes dans celui-ci pendant la modification ayant des propriétés non stabilisées en raison de l'inertie thermique du four **4**.

L'unité **35** de contrôle est programmée pour n'agir que si le résultat de cette vérification est positif (c'est-à-dire qu'aucun de ces paramètres n'a connu de variation).

Dans ce cas, il est avéré qu'un défaut du taux d'humidité (trop élevé) est à l'origine de la dérive du point **B,** les causes internes à l'installation (variation de la température de chauffe, de la vitesse de défilement, de la pression ou du débit de présoufflage ayant été éliminées. Les préformes concernées sont alors décrétées non conformes.

On a illustré cette situation sur la figure 3, qui représente un graphique sur lequel sont tracées les courbes de soufflage (centrées sur l'étape de présoufflage) de deux préformes qui se distinguent l'une de l'autre par leur taux d'humidité. La première préforme, qui présente un taux d'humidité correspondant au taux de référence d'un récipient modèle, et dont la courbe de soufflage est tracée en trait gras, présente lors du présoufflage un pic de pression en un point **B1,** dont la valeur de pression est notée $P_{B1}$ (correspondant à la pression de référence mémorisée dans la mémoire **39**) et dont l'instant de mesure correspondant est noté $t_{B1}$ (correspondant à l'instant de référence mémorisé dans la mémoire **39**). La deuxième préforme, qui présente un taux d'humidité sensiblement supérieur au taux de référence du récipient modèle, et dont la courbe de soufflage est tracée en trait mixte, présente lors du présoufflage un pic de pression en un point **B2,** dont la valeur de pression est notée $P_{B2}$, et dont l'instant de mesure correspondant est noté $t_{B2}$. On constate que les deux points **B1** et **B2** ont des instants de mesure coïncidents :

$$t_{B1} \approx t_{B2}$$

Dans la pratique, l'unité **35** de contrôle maître est programmée pour décréter coïncident tout instant $t_{B2}$ de mesure d'un pic de pression avec l'instant $t_{B1}$ de référence dès lors que la différence entre ces instants $t_{B1}$ et $t_{B2}$ est inférieure ou égal à quelques millisecondes (une dizaine de millisecondes tout au plus, de préférence moins de 5 millisecondes environ).

En revanche, on constate que la pression $P_{B2}$ réelle au point **B2** est sensiblement inférieure à la pression $P_{B1}$ de référence au point **B1** :

$$P_{B2} < P_{B1}$$

Dans la pratique, l'unité **35** de contrôle maître est programmée pour décréter toute pression réelle $P_{B2}$ différente de la pression $P_{B1}$ de référence dès lors que la différence entre ces valeurs est supérieure ou égale à plusieurs dizaines, voire plusieurs centaines de millibars.

L'unité **35** de contrôle est programmée pour commander alors au moins l'une des actions suivantes :

- générer une alerte, qui peut s'afficher sur un écran de contrôle à destination de l'opérateur chargé du suivi de l'installation ; cette alerte comprend par exemple un message invitant l'opérateur à contrôler le taux d'humidité des préformes, à remplacer les préformes **3** de la trémie par un autre lot, ou encore à effectuer des contrôles sur les récipients **2** produits ;
- stopper l'alimentation du four 4 en préformes, par exemple en commandant l'arrêt de l'élévateur **12** du système **5** d'alimentation ;
- éjecter les récipients **2** issus des préformes **3** non conformes ; cette opération peut être réalisée grâce à la traçabilité des récipients **2** induite par l'information de position angulaire des postes **14** de formage, issue du capteur **26** angulaire. Le récipient **2** issu d'une préforme décrétée non conforme peut alors être éjecté dès sa sortie du moule **15.**

Le procédé qui vient d'être décrit présente plusieurs avantages.

Premièrement, il permet d'effectuer, lorsqu'une dérive est constatée au point **B** (témoignant d'une mauvaise qualité des récipients produits), une discrimination entre des causes de dérive interne à la machine et des défauts affectant les préformes elles-mêmes. Cela permet d'éviter une aggravation de la dérive au point **B** par une correction indue des consignes de chauffe ou de formage.

Deuxièmement, ce procédé permet de procéder à un contrôle en continu de la conformité des préformes quant à leur taux d'humidité, grâce à la détection du point **B** et la vérification de sa coïncidence avec un point de référence correspondant à un récipient modèle.

Grâce à la vérification effectuée sur les consignes de chauffe et/ou de formage, ce contrôle de conformité est fiable.

**Revendications**

1. Procédé de fabrication de récipients (**2**) par soufflage à partir de préformes (**3**) en matière thermoplastique, qui comprend une phase cyclique de chauffe des préformes (**3**) au défilé au sein d'un four (**4**), à une température de chauffe et une vitesse de défilement suivant une consigne (CC) de chauffe programmée, suivie d'une phase cyclique de formage des préformes (**3**) au sein d'une unité (**6**) de formage comportant une pluralité de postes (**14**) de moulage chacun équipé d'un moule (**15**) à l'empreinte d'un récipient (**2**), la phase de formage comprenant une étape de présoufflage consistant à injecter dans les préformes (**3**) un gaz à une pression (**P**) et un débit de présoufflage suivant une consigne (**CF**) de formage programmée, suivie d'une étape de soufflage consistant à injecter dans les préformes (**3**) un gaz à une pression de soufflage supérieure à la pression de présoufflage, ce procédé comprenant en outre la répétition des opérations consistant à :

- mesurer, à chaque instant, une valeur réelle de la pression régnant dans les préformes (**3**) au sein de chaque moule (**15**), au moins pendant l'étape de présoufflage ;
- mémoriser les valeurs réelles de pression ainsi mesurées et les instants de mesure associés ;
- détecter parmi ces valeurs réelles de pression une valeur réelle maximale ;
- comparer cette valeur réelle maximale et l'instant de mesure associé avec, respectivement, une valeur ($P_{B1}$) maximale de référence prédéterminée et un instant ($t_{B1}$) de référence associé ;

ce procédé étant **caractérisé en ce qu'**il comprend en outre les opérations consistant à :
- vérifier si les conditions nécessaires suivantes sont conjointement remplies sur une période supérieure ou égale à la durée d'un cycle de chauffe et pour l'ensemble des postes (**14**) de moulage :

○ l'instant de mesure associé à la valeur réelle maximale coïncide avec l'instant ($t_{B1}$) de référence,
○ la valeur réelle maximale est inférieure à la valeur ($P_{B1}$) maximale de référence,

- si ces conditions sont conjointement remplies, vérifier dans un historique d'événements si la consigne (**CC**) de chauffe et/ou la consigne (**CF**) de formage n'a connu aucune modification pendant un intervalle de temps prédéterminé ayant précédé la mesure ;
- si le résultat de cette vérification est positif, décréter non conformes les préformes (**3**) concernées ;
- commander au moins l'une des actions suivantes :

○ générer une alerte,
○ stopper l'alimentation du four (**4**) en préformes (**3**),
○ éjecter les récipients (**2**) issus des préformes (**3**) non conformes.

2. Procédé selon la revendication 1, **caractérisé en ce que** l'instant de mesure associé à la valeur réelle maximale est décrété coïncider avec l'instant de référence si la différence entre eux est inférieure ou égale à 10 ms environ.

3. Procédé selon la revendication 2, **caractérisé en ce que** l'instant de mesure associé à la valeur réelle maximale est décrété coïncider avec l'instant de référence si la différence entre eux est inférieure ou égale à 5 ms environ.

4. Procédé selon l'une des revendications précédentes, **caractérisé en ce que** la valeur réelle maximale de pression est inférieure à la valeur maximale de référence si l'écart entre ces valeurs est supérieur à quelques centaines de millibars.

5. Procédé selon l'une des revendications précédentes, **caractérisé en ce que** la génération d'une alerte consiste à afficher un message sur une interface graphique.

6. Procédé selon l'une des revendications précédentes, **caractérisé en ce que**, le four (**4**) et l'unité (**6**) de chauffe étant pilotés respectivement par des unités (**37, 38**) de contrôle esclaves dédiées, asservies à une même unité (**35**) de contrôle maître, les opérations de vérification sont effectuées par l'unité (**35**) de contrôle maître.

7. Installation (**1**) de fabrication de récipients (**2**) par soufflage à partir de préformes (**3**) en matière thermoplastique, qui comprend :

- un four (**4**) dans lequel les préformes (**3**) subissent une phase cyclique de chauffe à une température de chauffe et une vitesse de défilement suivant une consigne (**CC**) de chauffe ;
- un système (**5**) d'alimentation du four (**4**) en préformes (**3**) ;
- une unité (**6**) de formage comportant une pluralité de postes (**14**) de moulage chacun équipé d'un moule (**15**) à l'empreinte d'un récipient (**2**), pour le formage des récipients (**2**) par soufflage ou étirage soufflage des préformes (**3**) issues du four (**4**), suivant une phase cyclique de formage comprenant une étape de présoufflage consistant à injecter dans les préformes (**3**) un gaz à une pression (**P**) et un débit de présoufflage suivant une consigne (**CF**) de formage, suivie d'une étape de soufflage consistant à injecter dans les préformes (**3**) un gaz à une pression de soufflage supérieure à la pression de présoufflage ;
- un système (**34**) de commande incluant au moins une mémoire (**39**) dans laquelle sont mémorisées la consigne (**CC**) de chauffe et la consigne (**CF**) de formage, ce système (**34**) étant programmé pour :

◦ mesurer, à chaque instant, une valeur réelle de la pression régnant dans les préformes (**3**) au sein de chaque moule (**15**), au moins pendant l'étape de présoufflage ;
◦ mémoriser les valeurs réelles de pression ainsi mesurées et les instants de mesure associés ;
◦ détecter parmi ces valeurs réelles de pression une valeur réelle maximale ;
◦ comparer cette valeur réelle maximale et l'instant de mesure associé avec, respectivement, une valeur ($P_{B1}$) maximale de référence prédéterminée et un instant ($t_{B1}$) de référence associé ;

cette installation (**1**) étant **caractérisée en ce que** le système (**34**) de commande est programmé pour :

- vérifier si les conditions nécessaires suivantes sont conjointement remplies sur une période supérieure ou égale à la durée d'un cycle de chauffe et pour l'ensemble des postes (**14**) de moulage :

◦ l'instant de mesure associé à la valeur réelle maximale coïncide avec l'instant ($t_{B1}$) de référence,
◦ la valeur réelle maximale est inférieure à la valeur ($P_{B1}$) maximale de référence,

- si ces conditions sont conjointement remplies, vérifier dans un historique d'événements si la consigne (**CC**) de chauffe et/ou la consigne (**CF**) de formage n'a connu aucune modification pendant un intervalle de temps prédéterminé ayant précédé la mesure ;
- si le résultat de cette vérification est positif, décréter non conformes les préformes (**3**) concernées ;
- commander au moins l'une des actions suivantes :

◦ générer une alerte,
◦ stopper l'alimentation du four (**4**) en préformes (**3**),
◦ éjecter les récipients (**2**) issus des préformes (**3**) non conformes.

8. Programme d'ordinateur implémenté sur une unité de traitement informatique intégrée à un système (**34**) de commande d'une installation de fabrication de récipients (**2**), ce programme comprenant des instructions pour la mise en oeuvre des étapes d'un procédé de fabrication de récipients (**2**) selon l'une des revendications 1 à 6.

**Patentansprüche**

1. Verfahren zur Herstellung von Behältern (2) durch Blasen anhand von Vorformlingen (3) aus Kunststoff, das eine zyklische Phase des Erwärmens der Vorformlinge (3) beim Durchlaufen eines Ofens (4) bei einer Erwärmungstemperatur und einer Durchlaufgeschwindigkeit entsprechend einem programmierten Erwärmungssollwert (CC) umfasst, gefolgt von einer zyklischen Phase des Umformens der Vorformlinge (3) in einer Umformungseinheit (6), welche eine Vielzahl von Formstationen (14) umfasst, von denen jede mit einem Formwerkzeug (15) mit dem Formhohlraum eines Behälters (2) versehen ist, wobei die Umformungsphase einen Vorblasschritt umfasst, der darin besteht, in die Vorformlinge (3) ein Gas mit einem Vorblasdruck (P) und einem Vorblasvolumenstrom entsprechend einem programmierten Umformungssollwert (CF) einzuspritzen, gefolgt von einem Blasschritt, der darin besteht, in die Vorformlinge (3) ein Gas mit einem Blasdruck, der größer als der Vorblasdruck ist, einzuspritzen, wobei dieses Verfahren darüber hinaus die Wiederholung der Vorgänge umfasst, die darin bestehen:

- zu jedem Zeitpunkt einen Istwert des Drucks, der in den Vorformlingen (3) innerhalb jedes Formwerkzeugs (15) herrscht, mindestens während des Vorblasschritts zu messen;
- die so gemessenen Druck-Istwerte und die zugehörigen Messzeitpunkte zu speichern;
- unter diesen Druck-Istwerten einen höchsten Istwert zu ermitteln;
- diesen höchsten Istwert und den zugehörigen Messzeitpunkt jeweils mit einem vorgegebenen Referenzhöchstwert ($P_{B1}$) und einem zugehörigen Referenzzeitpunkt ($t_{B1}$) zu vergleichen;
wobei dieses Verfahren **dadurch gekennzeichnet ist, dass** es ferner die Vorgänge umfasst, die darin bestehen:
- zu überprüfen, ob die folgenden notwendigen Bedingungen gemeinsam über einen Zeitraum, der größer oder gleich der Dauer eines Erwärmungszyklus ist, und für alle Formstationen (14) erfüllt sind:

o der zum höchsten Istwert gehörende Messzeitpunkt stimmt mit dem Referenzzeitpunkt ($t_{B1}$) überein,
o der höchste Istwert ist kleiner als der Referenzhöchstwert ($P_{B1}$),

- wenn diese Bedingungen gemeinsam erfüllt sind, in einer Ereignishistorie zu überprüfen, ob der Erwärmungssollwert (CC) und/oder der Umformungssollwert (CF) während eines vorgegebenen Zeitintervalls vor der Messung eine Änderung erfahren haben;

- wenn das Ergebnis dieser Überprüfung positiv ist, die betroffenen Vorformlinge (3) für nicht konform zu erklären;

- mindestens eine der folgenden Aktionen zu steuern:

    o Erzeugen eines Warnsignals,
    o Stoppen der Beschickung des Ofens (4) mit Vorformlingen (3),
    ∘ Auswerfen der aus den nicht konformen Vorformlingen (3) hervorgegangenen Behälter (2).

2. Verfahren nach Anspruch 1, **dadurch gekennzeichnet, dass** der zum höchsten Istwert gehörende Messzeitpunkt für mit dem Referenzzeitpunkt übereinstimmend erklärt wird, wenn die Differenz zwischen ihnen kleiner oder gleich etwa 10 ms ist.

3. Verfahren nach Anspruch 2, **dadurch gekennzeichnet, dass** der zum höchsten Istwert gehörende Messzeitpunkt für mit dem Referenzzeitpunkt übereinstimmend erklärt wird, wenn die Differenz zwischen ihnen kleiner oder gleich etwa 5 ms ist.

4. Verfahren nach einem der vorhergehenden Ansprüche, **dadurch gekennzeichnet, dass** der höchste Druck-Istwert geringer als der Referenzhöchstwert ist, wenn die Abweichung zwischen diesen Werten größer als einige Hundert Millibar ist.

5. Verfahren nach einem der vorhergehenden Ansprüche, **dadurch gekennzeichnet, dass** die Erzeugung eines Warnsignals darin besteht, eine Meldung auf einer grafischen Benutzeroberfläche anzuzeigen.

6. Verfahren nach einem der vorhergehenden Ansprüche, **dadurch gekennzeichnet, dass**, wenn der Ofen (4) und die Erwärmungseinheit (6) jeweils von dedizierten Slave-Steuereinheiten (37, 38) angesteuert werden, die mit derselben Master-Steuereinheit (35) gekoppelt sind, die Überprüfungsvorgänge von der Master-Steuereinheit (35) ausgeführt werden.

7. Anlage (1) zur Herstellung von Behältern (2) durch Blasen anhand von Vorformlingen (3) aus Kunststoff, die umfasst:

- einen Ofen (4), in dem die Vorformlinge (3) eine zyklische Erwärmungsphase bei einer Erwärmungstemperatur und einer Durchlaufgeschwindigkeit entsprechend einem Erwärmungssollwert (CC) erfahren;
- ein System (5) zur Beschickung des Ofens (4) mit Vorformlingen (3);
- eine Umformungseinheit (6), die eine Vielzahl von Formstationen (14) umfasst, von denen jede mit einem Formwerkzeug (15) mit dem Formhohlraum eines Behälters (2) versehen ist, zum Umformen der Behälter (2) durch Blasen oder Streckblasen der aus dem Ofen (4) kommenden Vorformlinge (3) gemäß einer zyklischen Umformungsphase, die einen Vorblasschritt umfasst, der darin besteht, in die Vorformlinge (3) ein Gas mit einem Vorblasdruck (P) und einem Vorblasvolumenstrom entsprechend einem Umformungssollwert (CF) einzuspritzen, gefolgt von einem Blasschritt, der darin besteht, in die Vorformlinge (3) ein Gas mit einem Blasdruck einzuspritzen, der größer als der Vorblasdruck ist;

- ein Steuerungssystem (34), das mindestens einen Speicher (39) beinhaltet, in dem der Erwärmungssollwert (CC) und der Umformungssollwert (CF) gespeichert sind, wobei dieses System (34) dazu programmiert ist, um:

    o zu jedem Zeitpunkt einen Istwert des Drucks, der in den Vorformlingen (3) innerhalb jedes Formwerkzeugs (15) herrscht, mindestens während des Vorblasschritts zu messen;
    o die so gemessenen Druck-Istwerte und die zugehörigen Messzeitpunkte zu speichern;
    o unter diesen Druck-Istwerten einen höchsten Istwert zu ermitteln;
    o diesen höchsten Istwert und den zugehörigen Messzeitpunkt jeweils mit einem vorgegebenen Referenzhöchstwert ($P_{B1}$) und einem zugehörigen Referenzzeitpunkt ($t_{B1}$) zu vergleichen;

wobei diese Anlage (1) **dadurch gekennzeichnet ist, dass** das Steuerungssystem (34) dazu programmiert ist, um:

- zu überprüfen, ob die folgenden notwendigen Bedingungen gemeinsam über einen Zeitraum, der größer oder gleich der Dauer eines Erwärmungszyklus ist, und für alle Formstationen (14) erfüllt sind:

    o der zum höchsten Istwert gehörende Messzeitpunkt stimmt mit dem Referenzzeitpunkt ($t_{B1}$) überein,
    o der höchste Istwert ist kleiner als der Referenzhöchstwert ($P_{B1}$),

- wenn diese Bedingungen gemeinsam erfüllt sind, in einer Ereignishistorie zu überprüfen, ob der Erwärmungssollwert (CC) und/oder der Umformungssollwert (CF) während eines vorgegebenen Zeitintervalls vor der Messung eine Änderung erfahren haben;

- wenn das Ergebnis dieser Überprüfung positiv ist, die betroffenen Vorformlinge (**3**) für nicht konform zu erklären;

- mindestens eine der folgenden Aktionen zu steuern:

    ◦ Erzeugen eines Warnsignals,
    ◦ Stoppen der Beschickung des Ofens (**4**) mit Vorformlingen (**3**),
    ◦ Auswerfen der aus den nicht konformen Vorformlingen (**3**) hervorgegangenen Behälter (**2**).

**8.** Computerprogramm, das auf einer Datenverarbeitungseinheit installiert ist, die in ein Steuerungssystem (**34**) einer Anlage zur Herstellung von Behältern (**2**) integriert ist, wobei dieses Programm Anweisungen zum Ausführen der Schritte eines Verfahrens zur Herstellung von Behältern (**2**) nach einem der Ansprüche 1 bis 6 umfasst.

**Claims**

**1.** Method for manufacturing containers (**2**) by blow moulding preforms (**3**) made of thermoplastic, which comprises: a cyclic phase of heating the preforms (**3**), on the run within an oven (**4**), to a heating temperature and at a run speed that depend on a programmed heating setpoint (**CC**), followed by a cyclic phase of forming the preforms (**3**) within a forming unit (**6**) including a plurality of moulding stations (**14**) each equipped with a mould (**15**) with the shape of a container (**2**), the forming phase comprising a pre-blow-moulding step consisting in injecting, into the preforms (**3**), a gas with a pressure (**P**) and a pre-blow-moulding flow rate that depend on a programmed forming setpoint (**CF**), followed by a blow-moulding step consisting in injecting, into the preforms (**3**), a gas with a blow-moulding pressure higher than the pre-blow-moulding pressure, this method furthermore comprising repeating operations consisting in:

    - measuring, at each point in time, an actual value of the pressure prevailing in the preforms (**3**) within each mould (**15**), at least during the pre-blow-moulding step;
    - storing the actual pressure values thus measured and the associated measurement points in time in memory;
    - detecting, among these actual pressure values, a maximum actual value; and
    - comparing this maximum actual value and the associated measurement point in time with a preset reference maximum value ($P_{B1}$) and an associated reference point in time ($t_{B1}$), respectively;

this method being **characterized in that** it furthermore comprises the operations consisting in:

- checking whether the following necessary conditions are conjointly met over a period longer than or equal to the length of a heating cycle and for all the moulding stations (**14**):

    ◦ the measurement point in time associated with the maximum actual value coincides with the reference point in time ($t_{B1}$),
    ◦ the maximum actual value is lower than the reference maximum value ($P_{B1}$);

- if these conditions are conjointly met, checking in an event history whether the heating setpoint (**CC**) and/or the forming setpoint (**CF**) were/was not modified in a preset time interval preceding the measurement;

- if the result of this check is positive, decreeing the preforms (**3**) in question to be out of specification; and

- taking at least one of the following actions:

    ◦ generating an alarm,
    ◦ stopping supplying the oven (**4**) with preforms (**3**), and/or
    ◦ ejecting the containers (**2**) obtained from the out-of-specification preforms (**3**).

**2.** Method according to Claim 1, **characterized in that** the measurement point in time associated with the maximum actual value is decreed to coincide with the reference point in time if the difference therebetween is smaller than or equal to about 10 ms.

**3.** Method according to Claim 2, **characterized in that** the measurement point in time associated with the maximum actual value is decreed to coincide with the reference point in time if the difference therebetween is smaller than or equal to about 5 ms.

**4.** Method according to one of the preceding claims, **characterized in that** the actual maximum pressure value is lower than the reference maximum value if the discrepancy between these values is larger than a few hundred millibars.

**5.** Method according to one of the preceding claims, **characterized in that** the generation of an alarm consists in displaying a message on a graphical interface.

**6.** Method according to one of the preceding claims, **characterized in that**, the oven (**4**) and heating unit (**6**) being respectively controlled by dedicated slave control units (**37, 38**) controlled by one and the same master control unit (**35**), the checking operations are carried out by the master control unit (**35**).

7. Installation (**1**) for manufacturing containers (**2**) by blow moulding preforms (**3**) made of thermoplastic, which comprises:

- an oven (**4**) in which the preforms (**3**) undergo a cyclic heating phase at a heating temperature and run speed that depend on a heating setpoint (**CC**);
- a system (**5**) for supplying the oven (**4**) with preforms (**3**);
- a forming unit (**6**) including a plurality of moulding stations (**14**) each equipped with a mould (**15**) with the shape of a container (**2**), in order to form the containers (**2**) by blow moulding or by stretch-blow moulding of the preforms (**3**) output from the oven (**4**) following a cyclic forming phase comprising a pre-blow-moulding step consisting in injecting, into the preforms (**3**), a gas with a pressure (**P**) and a pre-blow-moulding flow rate that depend on a forming setpoint (**CF**), followed by a blow-moulding step consisting in injecting, into the preforms (**3**), a gas with a blow-moulding pressure higher than the pre-blow-moulding pressure;
- a control system (**34**) including at least one memory (**39**) in which the heating setpoint (**CC**) and the forming setpoint (**CF**) are stored, this system (**34**) being programmed:

   ◦ to measure, at each point in time, an actual value of the pressure prevailing in the preforms (**3**) within each mould (**15**), at least during the pre-blow-moulding step;
   ◦ to store the actual pressure values thus measured and the associated measurement points in time in memory;
   ◦ to detect, among these actual pressure values, a maximum actual value; and
   ◦ to compare this maximum actual value and the associated measurement point in time with a preset reference maximum value ($P_{B1}$) and an associated reference point in time ($t_{B1}$), respectively;

this installation (**1**) being **characterized in that** the control system (**34**) is programmed:

- to check whether the following necessary conditions are conjointly met over a period longer than or equal to the length of a heating cycle and for all the moulding stations (**14**):

   ◦ the measurement point in time associated with the maximum actual value coincides with the reference point in time ($t_{B1}$),
   ◦ the maximum actual value is lower than the reference maximum value ($P_{B1}$);

- if these conditions are conjointly met, to check in an event history whether the heating setpoint (**CC**) and/or the forming setpoint (**CF**) were/was not modified in a preset time interval preceding the measurement;
- if the result of this check is positive, decreeing the preforms (**3**) in question to be out of specification; and
- taking at least one of the following actions:

   ◦ generating an alarm,
   ◦ stopping supplying the oven (**4**) with preforms (**3**), and/or
   ◦ ejecting the containers (**2**) obtained from the out-of-specification preforms (**3**).

8. Computer program implemented on a computational processing unit integrated into a system (**34**) for controlling an installation for manufacturing containers (**2**), this program comprising instructions for implementing steps of a method for manufacturing containers (**2**) according to one of Claims 1 to 6.

FIG.1

FIG.2

# FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2935924
- US 20110236518 A
- FR 2909305
- US 2010201013 A
- WO 2013178903 A
- EP 2537664 A1
- EP 2574902 A
- US 2013081454 A
- FR 2864050
- US 7556137 B